# FASCICULE DE BREVET EUROPEEN

(11) **EP 0 552 111 B1**
(45) Date de publication et mention de la délivrance du brevet: **05.07.1995**
(21) Numéro de dépôt: 93420004.9
(22) Date de dépôt: 05.01.1993
(51) Int. Cl.: F21V 17/00, F16B 1/00

(54) **Boîtier à bague de fixation flexible**
Gehäuse mit flexiblem Befestigungsring
Housing with a flexible fixing ring

(30) Priorité: 14.01.1992 FR 9200382
(43) Date de publication de la demande: 21.07.1993
(73) Titulaire: ZEDEL, F-38920 Crolles (FR)
(72) Inventeur: Maurice, Alain, f-38610 Gieres (FR)
(74) Mandataire: Hecké, Gérard

(56) Documents cités:
- EP-A- 0 326 420
- DE-U- 8 600 542

## Description

L'invention est relative à un boîtier en matériau plastique moulé, comportant :
- un corps rigide et creux ayant un fond et une paroi latérale de révolution équipée d'un embout d'extrémité situé à l'opposé du fond,
- un couvercle de fermeture venant en engagement contre l'embout,
- un premier filetage mâle agencé le long de la surface extérieure de la paroi latérale du corps,
- et une bague de fixation ayant un troisième filetage femelle destinée à être vissée sur le premier filetage pour assurer le maintien stable du couvercle contre l'embout.

Les lampes d'éclairage domestique possèdent généralement un embout cylindrique, et la vitre transparente est fixée sur l'embout au moyen d'une bague à filetage interne. La vitre ou écran transparent peut être une pièce séparée ou être intégrée à la bague, laquelle possède une forme cylindrique. Ce type de lampe d'éclairage, par exemple représenté dans le document DE-U-8600 542, comporte une seule ampoule électrique portée par un support fixé à un réflecteur parabolique, disposé coaxialement par rapport au boîtier.

Certaines lampes d'éclairage pour l'industrie, par exemple représentées dans le document EP-A-0326 420, comportent un système à double focalisation utilisant deux ampoules électriques, et deux réflecteurs disposés côte à côte. L'incorporation de ce système dans un boîtier cylindrique nécessite un encombrement important, ce qui est incompatible pour l'usage de lampes frontales, lesquelles sont portées sur la tête des utilisateurs.

La réduction de l'encombrement du boîtier nécessite une modification du corps rigide, par exemple par le remplacement de la section circulaire de l'embout et du couvercle associé, par une forme non circulaire. L'emploi d'une bague à vis à structure rigide est néanmoins impossible pour assurer la fermeture du boîtier.

Un premier objet de l'invention consiste à réaliser un boîtier de section non circulaire obturé par une bague de vissage.

Un deuxième objet de l'invention consiste à réaliser un système d'étanchéité dans un boîtier non circulaire.

Le boîtier selon l'invention est caractérisé en ce que l'embout du corps possède une section non circulaire, notamment ovale ou ellipsoïdale, que le couvercle est pourvu d'une embase de section sensiblement similaire à celle de l'embout, que la bague est réalisée par injection plastique d'une pièce flexible ayant une forme initiale cylindrique, et que la paroi de ladite pièce comprend une pluralité de stries s'étendant transversalement par rapport au troisième filetage femelle, de manière à définir une première série de zones à sections rétrécies formant charnières, imbriquées angulairement entre une deuxième série de zones à sections rigides, la présence des stries autorisant une déformation élastique de la bague pour adapter la forme du troisième filetage femelle à celle du premier filetage mâle du corps rigide.

L'étanchéité du boîtier est obtenu grâce à un épaulement de l'embout destiné à recevoir un joint d'étanchéité épousant la forme de l'embout. La partie postérieure de l'embase comprend un rebord d'appui venant en contact avec le joint, le rebord étant situé entre une languette supérieure de recouvrement et une surface interne de centrage coopérant respectivement avec des faces de positionnement conjuguées délimitant ledit épaulement de l'embout.

Selon une caractéristique de l'invention, la partie postérieure de la bague coopère en fin de course de vissage avec un bossage solidaire du corps, le bossage étant agencé pour assurer le centrage arrière de la bague, et pour empêcher toute pénétration de corps étrangers à l'intérieur des filetages.

Selon une autre caractéristique de l'invention, la surface latérale externe de l'embase comporte un deuxième filetage mâle coopérant avec le troisième filetage femelle de manière à assurer un montage imperdable du couvercle sur la bague lors du dévissage.

Le périmètre moyen du premier ou troisième filetage est légèrement supérieur à celui du deuxième filetage. Il en résulte que l'embase du couvercle est montée avec jeu sur la bague.

Le boîtier plastique selon l'invention peut être utilisé dans tous les domaines de la technique. Il est particulièrement avantageux d'en faire usage dans le domaine de l'électricité, notamment pour l'éclairage électrique. Dans le cas d'une lampe d'éclairage, le couvercle est remplacé par une vitre ou un écran transparent.

D'autres avantages et caractéristiques ressortiront plus clairement de la description qui va suivre de deux modes de réalisation de l'invention, donnés à titre d'exemples non limitatifs, et représentés aux dessins annexés, dans lesquels :
- la figure 1 est une vue en élévation de l'embout du corps rigide du boîtier selon l'invention;
- la figure 2 montre une vue arrière en perspective de la bague de fixation;
- la figure 3 est une vue en élévation de la bague venant de moulage;
- la figure 4 est une vue en élévation du boîtier après mise en place du couvercle, et de la bague de fixation;
- les figures 5 et 6 représentent une vue en coupe du boîtier en position démontée du couvercle, après dévissage de la bague;
- la figure 7 est une vue en coupe selon la ligne 7-7 de la figure 4, représentant le boîtier en position assemblée;
- la figure 8 est une vue identique à la figure 6 d'une variante de réalisation de l'ensemble couvercle et bague;
- la figure 9 est une vue identique à la figure 7 avec l'ensemble de la figure 8;
- la figure 10 montre une vue en coupe d'une lampe d'éclairage, ayant un boîtier selon la figure 7.

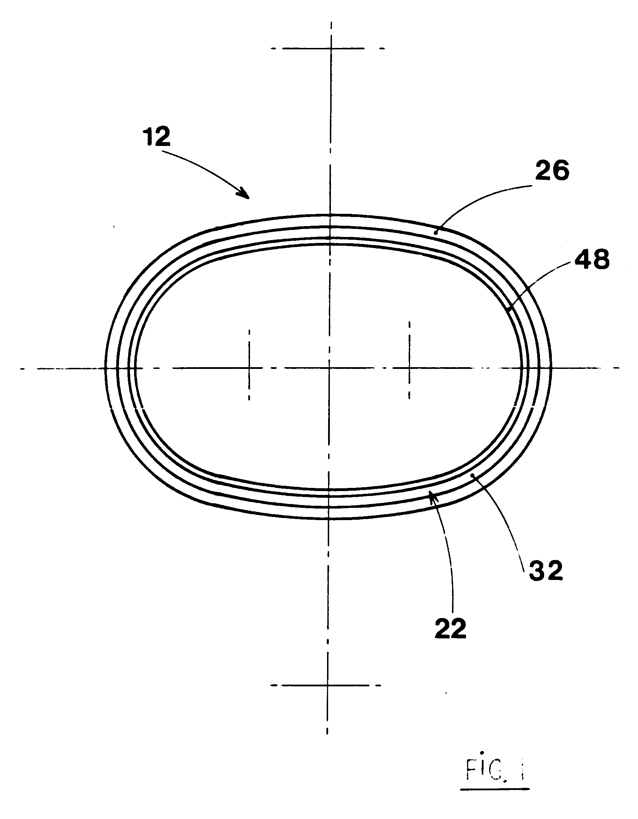

Sur les figures 1 à 7, un boîtier 10 en matériau plastique moulé présente une forme de révolution ayant une section ovale ou ellipsoïdale, et comporte un corps 12 creux assemblé à un couvercle 14 de fermeture au moyen d'une bague 16 de fixation.

Le corps 12 rigide comprend un fond 18 et une paroi latérale 20 de révolution dotée d'un embout 22 d'extrémité coopérant avec une embase 24 du couvercle 14. La surface extérieure de la paroi latérale 20 est équipée d'un premier filetage 26 mâle, et d'un bossage 28 continu échelonnés le long de l'axe longitudinal 30 entre l'embout 22 ouvert et le fond 18. L'embout 22 comporte un épaulement 32 de réception d'un joint 34 d'étanchéité.

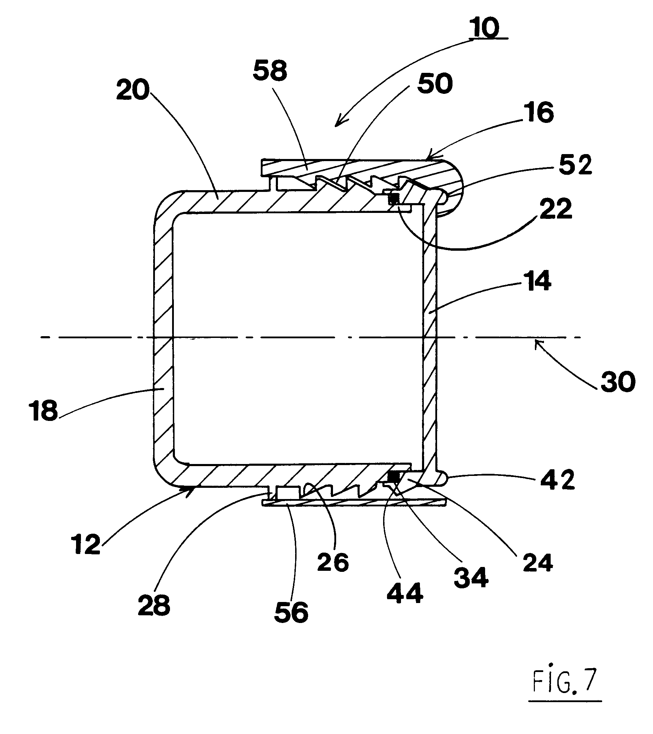

Le couvercle 14 est rigide et s'étend perpendiculairement à l'axe longitudinal 30 avec venue en engagement de l'embase 24 contre l'embout 22 avec interposition du joint 34. La partie postérieure de l'embase 24 comprend un rebord d'appui 36 venant en contact avec le joint 34, le rebord 36 étant situé entre une languette 38 de recouvrement, et une surface interne 40 de centrage. La partie antérieure de l'embase 24 est pourvue d'une saillie 42 servant de butée à la bague 16 en position assemblée du boîtier 10 (figure 7). La surface latérale externe de l'embase 24 comporte un deuxième filetage 44 mâle agencé longitudinalement entre la languette 38 et la saillie 42.

Le périmètre moyen du premier filetage 26 du corps 12 est légèrement supérieur à celui du deuxième filetage 44 de l'embase 24.

La forme du couvercle 14 épouse exactement la section de l'embout 22 grâce à la coopération de la languette 38 et de la surface interne 40 de l'embase 24 avec des faces de positionnement 46, 48 conjuguées, délimitant l'épaulement 32 de l'embout 22.

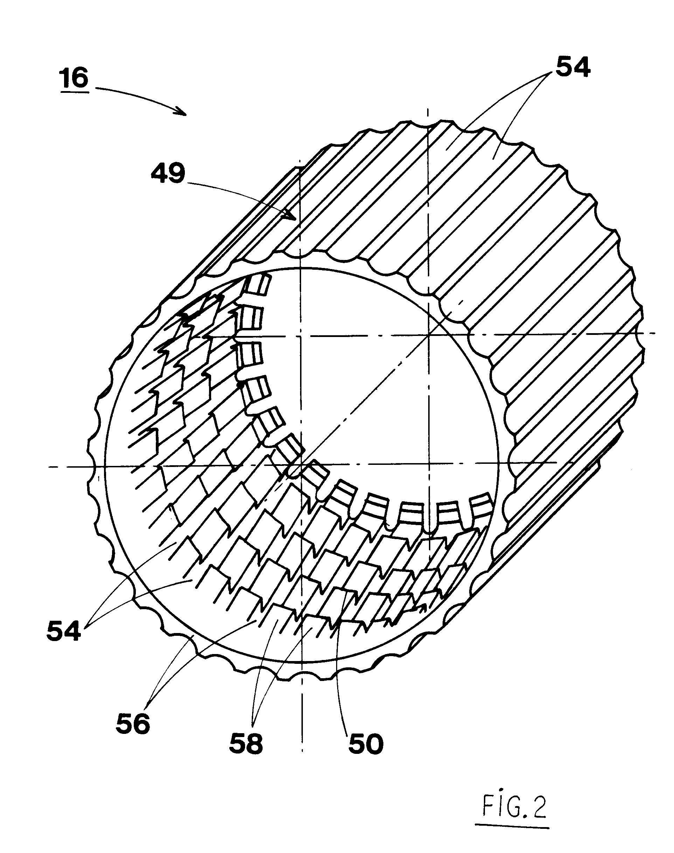

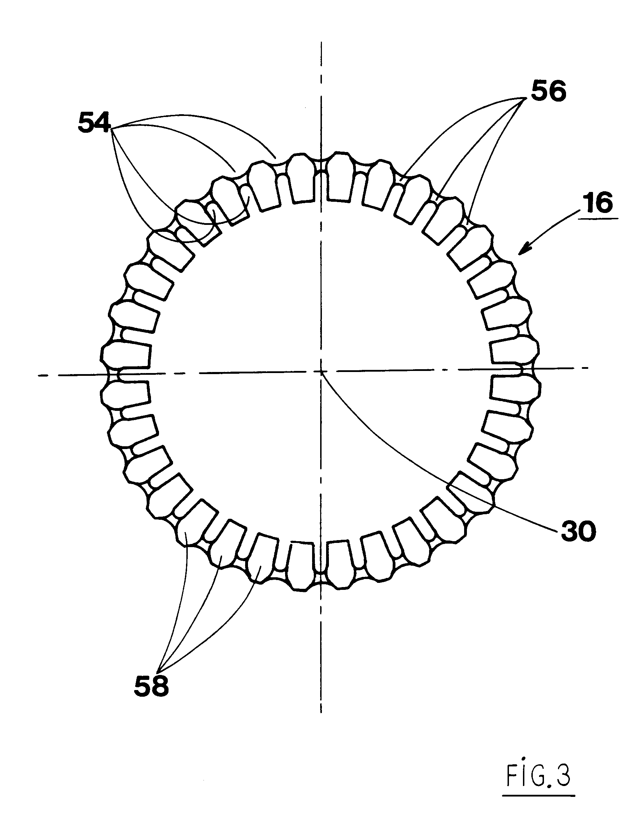

La bague 16 de fixation est formée par une pièce 49 plastique flexible réalisée par injection, et présentant une forme initiale cylindrique (figure 3). La paroi interne de la bague 16 est pourvue d'un troisième filetage 50 femelle destiné à coopérer avec les premier et deuxième filetages 26, 44 lors des opérations de vissage ou de dévissage de la bague 16 de fixation. Le périmètre moyen du premier filetage 26 mâle du corps 12, et du troisième filetage 50 femelle de la bague 16 est sensiblement identique. La partie antérieure de la bague 16 est incurvée et présente une encoche 52 semi-ouverte susceptible de coiffer la saillie 42 de l'embase 24 en fin de course de vissage de la bague 16 (figure 7). La paroi interne ou externe de la bague 16 comporte une pluralité de stries 54 (figure 2) parallèles, s'étendant parallèlement l'une à l'autre selon une direction transversale au troisième filetage 50, de manière à définir une première série de zones 56 à sections rétrécies, imbriquée angulairement entre une deuxième série de zones 58 à sections rigides. La présence des stries 54 autorise une déformation élastique de la bague 16 pour l'adapter à la forme ovale du boîtier 10 lors du vissage du troisième filetage 50 sur le deuxième filetage 44 du couvercle 14, et sur le premier filetage 26 du corps 12.

La partie postérieure de la bague 16 comporte une surface interne lisse coopérant avec le bossage 28 du corps 12 en fin de course de vissage de la bague 16 (figure 7) pour assurer le centrage arrière de la bague 16, et empêcher toute pénétration de corps étrangers à l'intérieur des filetages 50,26.

Le montage et démontage du boîtier 10 s'effectuent de la manière suivante :

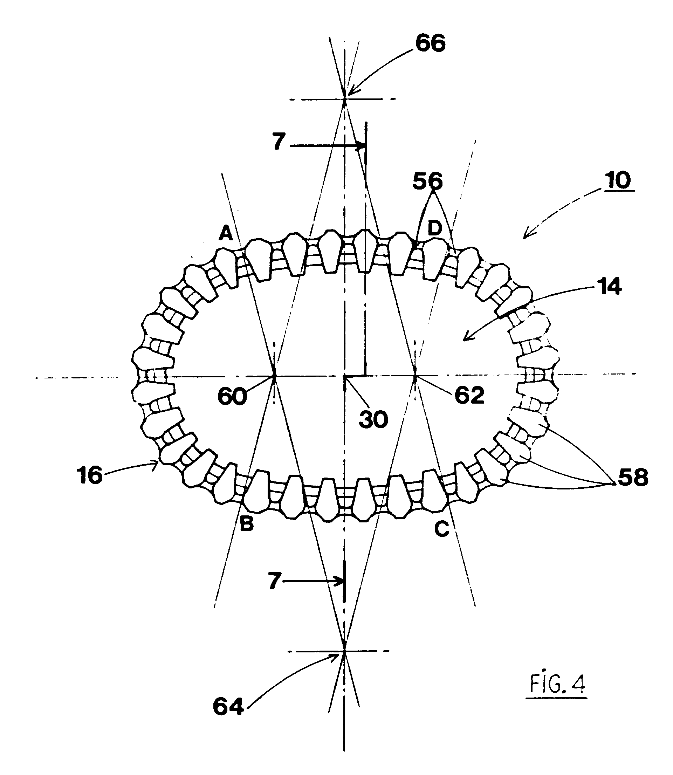

Pour l'opération de montage, l'embase 24 du couvercle 14 prend appui sur l'embout 22 du corps 12, et après déformation de la bague 16 cylindrique, on visse cette dernière sur les deux filetages 44, 26 respectifs de l'embase 24 et du corps 12 pour obtenir la forme ovale de la figure 4. La bague 16 s'adapte exactement à la forme ovale du corps 12, et assure le serrage du couvercle 14 contre l'embout 22 en fin de course de vissage (figure 7). La présence du joint 34 entre l'épaulement 32 de l'embout 22 et le rebord 36 de l'embase 24 forme une étanchéité statique entre le corps 12 et le couvercle 14.

Le centrage du couvercle 14 par rapport au corps 12 est assuré par la venue en contact de la surface interne 40 et de la languette 38 de l'embase 24 respectivement avec les faces d'appui 48, 46 externes de l'embout 22.

En fin de course de vissage de la bague 16 (figure 7), l'encoche 52 prend appui sur la saillie 42 de l'embase 24, et le deuxième filetage 44 mâle de l'embase 24 se trouve dans le dernier cran du troisième filetage 50 femelle au voisinage de la partie antérieure de la bague 16.

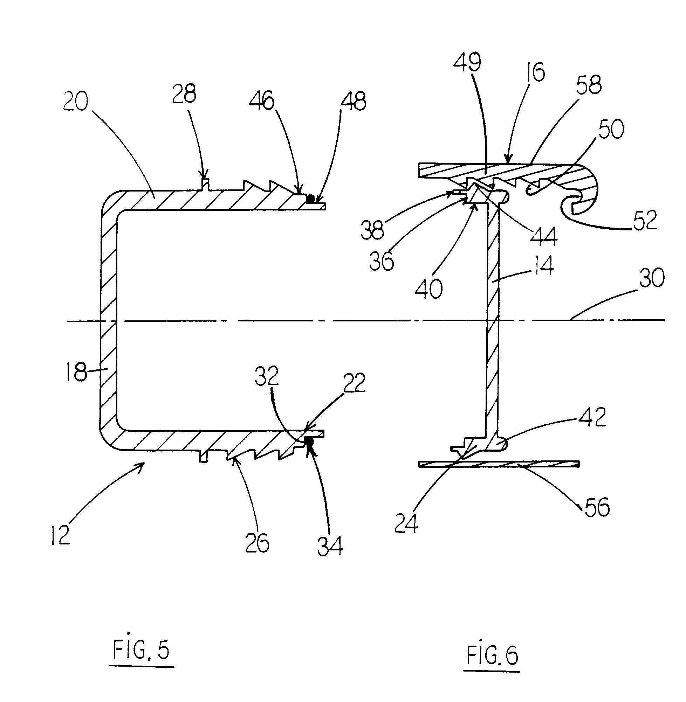

Lors de l'opération de démontage du couvercle 14, on dévisse complètement la bague 16 de fixation pour désolidariser le couvercle 14 du corps 12 (figures 5 et 6). Le couvercle 14 reste néanmoins prisonnier de la bague 16, étant donné que le deuxième filetage 44 mâle de l'embase 24 est logé avec jeu dans le premier cran du troisième filetage 50.

La forme ovale de la bague 16 (figure 4) en position de montage du boîtier 10, comporte une première paire de portions opposées AB, CD circulaires centrées sur deux foyers 60, 62 internes, et une deuxième paire de portions AD, BC centrées respectivement sur deux axes 64, 66 externes disposés symétriquement par rapport à l'axe longitudinal 30. Les axes 64, 66 et les deux foyers 60, 62 se trouvent situés aux sommets d'un parallèlogramme.

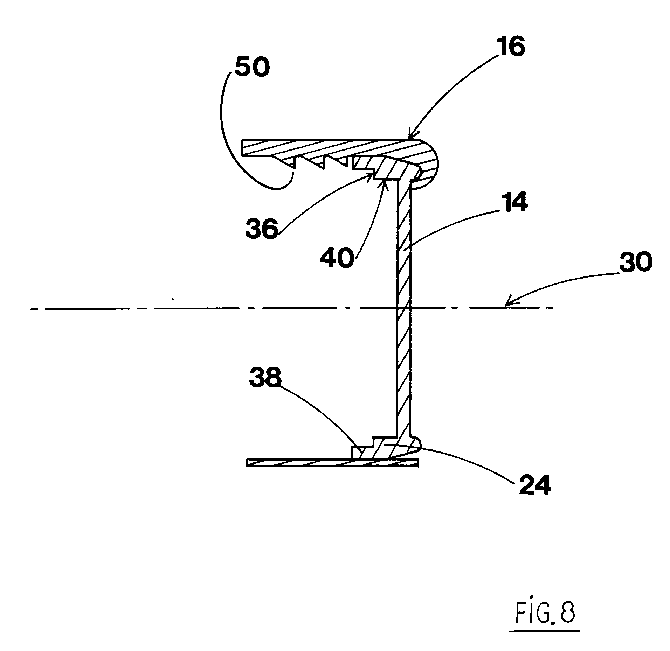

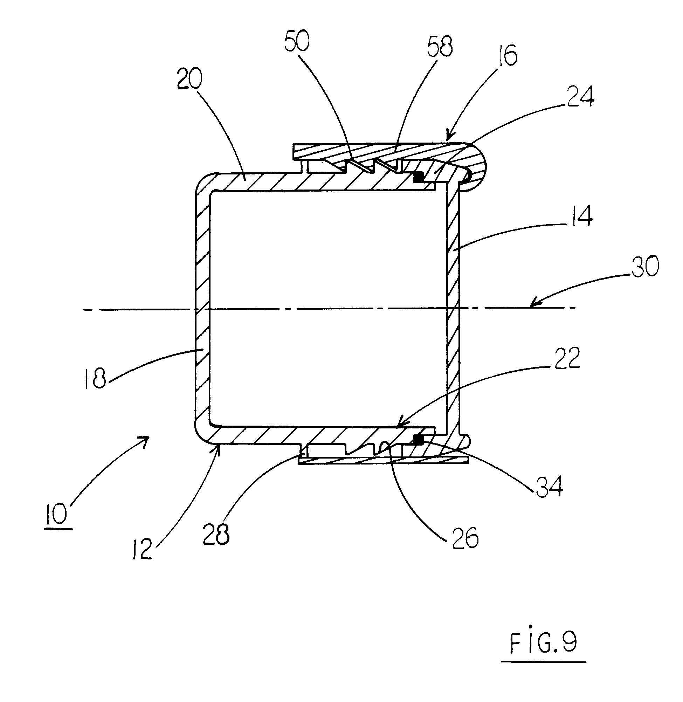

En référence aux figures 8 et 9, l'embase 24 est dépourvue du deuxième filetage 44, et la languette 38 présente une section supérieure à celle des figures 1 à 7.

Le couvercle 14 est monté par clipsage sur la bague 16 suite à l'encliquetage du dernier filet du filetage 50 sur la languette 38. Le couvercle 14 est ainsi monté imperdable lors du dévissage de la bague 16.

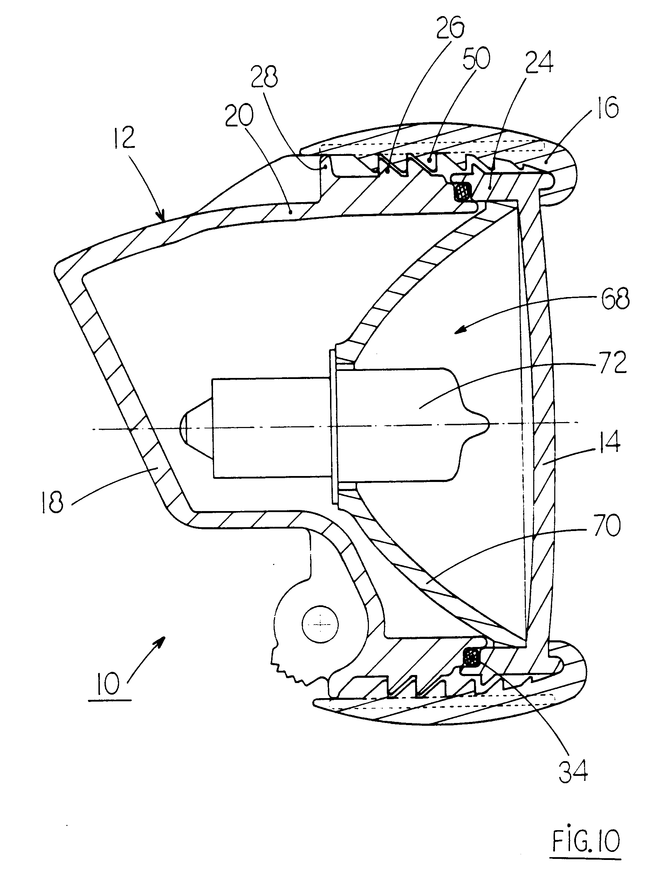

Selon la figure 10, le boîtier 10 sert de logement à une lampe d'éclairage 68. Le couvercle 14 est formé par un écran transparent, et l'embase 24 porte un réflecteur 70 parabolique, traversé dans la partie centrale par un support d'ampoule 72.

La forme ovale du boîtier 10 permet avantageusement l'incorporation d'une paire de réflecteurs avec deux supports d'ampoule au voisinage des deux foyers 60, 62. On obtient alors une lampe d'éclairage à double focalisation.

Selon une autre variante, le boîtier 10 peut être utilisé pour le logement de piles ou accumulateurs électriques.

Le boîtier 10 peut avoir toute autre forme non circulaire.

## Revendications

1. Boîtier en matériau plastique moulé comportant :
- un corps 12 rigide et creux ayant un fond 18 et une paroi latérale 20 de révolution équipée d'un embout 22 d'extrémité situé à l'opposé du fond 18,
- un couvercle 14 de fermeture venant en engagement contre l'embout 22,
- un premier filetage 26 mâle agencé le long de la surface extérieure de la paroi latérale 20 du corps 12,
- et une bague de fixation 16 ayant un troisième filetage 50 femelle destinée à être vissée sur le premier filetage 26 pour assurer le maintien stable du couvercle 14 contre l'embout 22,
caractérisé en ce que l'embout 22 du corps 12 possède une section non circulaire, notamment ovale ou ellipsoïdale, que le couvercle 14 est pourvu d'une embase 24 de section sensiblement similaire à celle de l'embout 22, que la bague 16 est réalisée par injection plastique d'une pièce 49 flexible ayant une forme initiale cylindrique, et que la paroi de ladite pièce 49 comprend une pluralité de stries 54 s'étendant transversalement par rapport au troisième filetage 50 femelle, de manière à définir une première série de zones 56 à sections rétrécies formant charnières imbriquées angulairement entre une deuxième série de zones 58 à sections rigides, la présence des stries 54 autorisant une déformation élastique de la bague 16 pour adapter la forme du troisième filetage 50 femelle à celle du premier filetage 26 mâle du corps 12 rigide.

2. Boîtier selon la revendication 1, caractérisé en ce que l'embout 22 comporte un épaulement 32 de réception d'un joint 34 d'étanchéité, et que la partie postérieure de l'embase 24 comprend un rebord d'appui 36 venant en contact avec le joint 34, le rebord 36 étant situé entre une languette 38 supérieure de recouvrement et une surface interne 40 de centrage coopérant respectivement avec des faces de positionnement 46,48 conjuguées délimitant ledit épaulement 32 de l'embout 22.

3. Boîtier selon la revendication 1 ou 2, caractérisé en ce que la partie postérieure de la bague 16 coopère en fin de course de vissage avec un bossage 28 solidaire du corps 12, le bossage 28 étant agencé pour assurer le centrage arrière de la bague 16, et pour empêcher toute pénétration de corps étrangers à l'intérieur des filetages 50, 26.

4. Boîtier selon la revendication 1, 2 ou 3, caractérisé en ce que la partie antérieure de l'embase 24 est dotée d'une saillie 42 servant de butée à la bague 16 en position d'assemblage du boîtier 10.

5. Boîtier selon la revendication 4, caractérisé en ce que la partie antérieure de la bague de fixation 16 est incurvée avec formation d'une encoche 52 semi-ouverte de forme conjuguée à la saillie 42 de l'embase 24.

6. Boîtier selon l'une des revendications 1 à 5, caractérisé en ce que la surface latérale externe de l'embase 24 comporte un deuxième filetage 44 mâle coopérant avec le troisième filetage 50 femelle de manière à assurer un montage imperdable du couvercle 14 sur la bague 16 lors du dévissage.

7. Boîtier selon la revendication 6, caractérisé en ce que le périmètre moyen du premier ou troisième filetage 26, 50 est légèrement supérieur à celui du deuxième filetage 44, et que l'embase 24 du couvercle 14 est montée avec jeu dans le troisième filetage 50 de la bague 16.

8. Boîtier selon l'une des revendications 2 à 5, caractérisé en ce que le couvercle 14 est clipsé sur la bague 16 par l'action d'encliquetage du dernier filet du troisième filetage 50 sur la languette 38 de l'embase 24.

9. Boîtier selon l'une des revendications 1 à 8, utilisé pour le logement d'une lampe d'éclairage, caractérisé en ce que le couvercle 14 est agencé en écran transparent, et qu'à l'embase 24 est associé un premier réflecteur 70 parabolique, traversé dans la partie centrale par un support d'ampoule 72.

10. Boîtier selon la revendication 9, caractérisé en ce que la lampe comporte un système à double focalisation grâce à un deuxième ensemble réflecteur et support d'ampoule, et que les deux réflecteurs sont disposés au voisinage des deux foyers 60, 62 du boîtier 10.

## Claims

1. A casing made of molded plastic material comprising :
- a rigid hollow body 12 having a back panel 18 and a side wall 20 of revolution equipped with an end part 22 located opposite the back panel 18,
- a closing cover 14 coming into engagement against the end part 22,
- a male first thread 26 arranged along the external surface of the side wall 20 of the body 12,
- a fixing ring 16 having a third female thread 50 designed to be screwed onto the first male thread 26 to ensure that the cover 14 is held stably against the end part 22,
characterized in that the end part has a non-circular cross section, notably oval or ellipsoid, that the cover 14 is provided with a base part 24 having a cross-section appreciably the same as that of the end part 22, that the wall of said part 49 comprises a plurality of serrations 54 extending transversely with respect to the female third thread 50, in such a way as to define a first series of zones 56 with reduced sections forming hinges angularly imbricated between a second series of zones 58 with rigid sections, the presence of the serrations 54 allowing an elastic deformation of the ring 16 to make the shape of the female third thread 50 fit that of the male first thread 26 of the rigid body 12.

2. The casing according to claim 1, characterized in that the end part 22 comprises a shoulder 32 receiving a seal 34, and that the rear part of the base part 24 comprises a bearing edge 36 coming into contact with the seal 34, the edge 36 being located between an upper overlapping tab 38 and an internal centering surface 40 cooperating respectively with conjugate positioning faces 46, 48 bounding said shoulder 32 of the end part 22.

3. The casing according to claim 1, or 2, characterized in that the rear part of the ring 16 cooperates at the end of tightening travel with a boss 28 fixedly secured to the body 12, the boss 28 being arranged to perform rear centering of the ring 16, and to prevent any foreign bodies from getting into the threads 50, 26.

4. The casing according to claim 1,2 or 3, characterized in that the front part of the base part 24 is provided with a protrusion 42 acting as a stop for the ring 16 in the assembled position of the casing 10.

5. The casing according to claim 4, characterized in that the fixing ring 16 is curved with formation of a semi-open notch 52 of conjugate shape to the protrusion 42 of the base part 24.

6. The casing according to one of the claims 1 to 5, characterized in that the external lateral surface of the base part 24 comprises a male second thread 44 cooperating with the female third thread 50 so as to achieve captive assembly of the cover 14 on the ring 16 when unscrewing is performed.

7. The casing according to claim 6, characterized in that the mean perimeter of the first or third thread 26, 50 is slightly greater than that of the second thread 44, and that the base part 24 of the cover 14 is assembled with clearance in the third thread 50 of the ring 16.

8. The casing according to one of the claims 2 to 5, characterized in that the cover 14 is clipped onto the ring 16 by the clipping action of the last thread of the third thread 50 on the tab 38 of the base part 24.

9. The casing according to one of the claims 1 to 8, used for housing a lighting lamp, characterized in that the cover 14 is arranged as a transparent screen, and that the base part 24 has associated with it a first parabolic reflector 70, through the center part of which a bulb holder 72 passes.

10. The casing according to claim 9, characterized in that the lamp comprises a double focusing system by means of a second reflector and bulb holder assembly, and that the two reflectors are arranged near the two focusing points 60, 62 of the casing 10.

## Patentansprüche

1. Gehäuse aus gegossenem Kunststoff mit:
- einem steifen Hohlkörper (12), der einen Boden (18) und eine seitliche Umfangswand (20) aufweist, welche mit einem Endstück (22) an ihrem dem Boden (18) gegenüberliegenden Ende versehen ist,
- einem Verschlußdeckel (14), der am Endstück (22) anliegt,
- einem ersten Außengewinde (26), das an der Außenfläche der seitlichen Wand (20) des Körpers (12) ausgebildet ist,
- einem Befestigungsring (16) mit einem dritten Innengewinde (50) zum Aufschrauben auf das erste Gewinde (26), um so einen stabilen Halt des Deckels (14) am Endstück (22) zu gewährleisten,
dadurch gekennzeichnet, daß das Endstück (22) des Körpers (12) einen nicht kreisförmigen, insbesondere einen ovalen oder ellipsenförmigen, Querschnitt aufweist, daß der Deckel (14) mit einem Ansatzstück (24) versehen ist, dessen Querschnitt im wesentlichen demjenigen des Endstücks (22) entspricht, daß der Ring (16) durch Spritzguß eines flexiblen Teils (49) mit ursprünglich zylindrischer Gestalt erhalten wird und daß die Wand des Teils (49) eine Vielzahl von Rillen (54) aufweist, die sich der bezüglich des dritten Innengewindes (50) derart erstrecken, daß eine erste Reihe von Abschnitten (56) mit zurückspringenden Querschnitten gebildet wird, welche sich winkelmäßig zwischen einer zweiten Reihe von Abschnitten (58) mit steifen Querschnitten überlappen, wobei die Anwesenheit der Rillen (54) eine elastische Verformung des Ringes (16) ermöglicht, um die Gestalt des dritten Innengewindes (50) an diejenige des ersten Außengewindes (26) des steifen Körpers (12) anzupassen.

2. Gehäuse nach Anspruch 1, dadurch gekennzeichnet, daß das Endstück (22) eine Aufnahmeschulter (32) für einen Dichtring (34) aufweist und daß der rückwärtige Abschnitt des Ansatzstücks (24) einen Stützrand (36) aufweist, welcher den Dichtring (34) berührt, wobei der Rand 36 zwischen einer oberen Abdeckzunge (38) und einer inneren Zentrierfläche (40) angeordnet ist, und mit einander zugeordneten Positionierflächen (46, 48) zusammenwirkt, welche die Schulter (32) des Endstücks (22) begrenzen.

3. Gehäuse nach Anspruch 1 oder 2, dadurch gekennzeichnet, daß der rückwärtige Abschnitt des Ringes (16) am Ende des Schraubweges mit einem Anschlag (28) am Körper (12) zusammenwirkt, wobei der Anschlag (28) derart ausgestaltet ist, daß er die rückwärtige Zentrierung des Ringes (16) gewährleistet, um so jegliches Eindringen von Fremdkörpern in das Innere der Gewinde (50, 26) zu verhindern.

4. Gehäuse nach Anspruch 1, 2 oder 3, dadurch gekennzeichnet, daß der vordere Abschnitt des Ansatzstücks (24) mit einem Vorsprung (42) versehen ist, der als Anschlag für den Ring (16) in der Zusammenbaustellung des Gehäuses dient.

5. Gehäuse nach Anspruch 4, dadurch gekennzeichnet, daß der vordere Abschnitt des Befestigungsringes (16) gebogen ist und dabei eine halboffene Aussparung (52) bildet, deren Form an den Vorsprung (42) des Ansatzstücks (24) angepaßt ist.

6. Gehäuse nach einem der Ansprüche 1 bis 5, dadurch gekennzeichnet, daß die äußere Seitenwand des Ansatzstücks (24) ein zweites Außengewinde (44) aufweist, welches mit dem dritten Innengewinde (50) dergestalt zusammenwirkt, daß eine verlustsichere Montage des Deckels (14) am Ring während des Abschraubens besteht.

7. Gehäuse nach Anspruch 6, dadurch gekennzeichnet, daß der mittlere Perimeter der ersten und dritten Gewinde (26, 50) geringfügig größer ist als derjenige des zweiten Gewindes (44) und daß das Ansatzstück (24) des Deckels (14) mit Spiel in das dritte Gewinde (50) des Ringes (16) eingreift.

8. Gehäuse nach einem der Ansprüche 2 bis 5, dadurch gekennzeichnet, daß der Deckel (14) auf den Ring (16) aufgedrückt wird durch einen Einrastvorgang des letzten Gewindeganges des dritten Gewindes (50) auf die Zunge (38) des Ansatzstückes (24).

9. Gehäuse nach einem der Ansprüche 1 bis 8 zur Aufnahme einer Glühbirne, dadurch gekennzeichnet, daß das Gehäuse (14) als durchsichtige Scheibe ausgebildet ist und daß das Ansatzstück (24) einem ersten Parabolreflektor (70) zugeordnet ist, dessen mittlerer Abschnitt von einer Glühlampenfassung (72) durchsetzt ist.

10. Gehäuse nach Anspruch 9, dadurch gekennzeichnet, daß die Lampe eine Anordnung mit doppelter Fokussierung aufweist, dank einer zweiten Reflektoranordnung und einer zweiten Glühlampenfassung und daß die beiden Reflektoren in der Nähe der beiden Brennpunkte (60, 62) des Gehäuses (10) angeordnet sind.
